# EUROPÄISCHE PATENTANMELDUNG

(11) **EP 4 424 764 A1**
(43) Veröffentlichungstag der Anmeldung: **04.09.2024**
(21) Anmeldenummer: 23159181.9
(22) Anmeldetag: 28.02.2023
(51) Int. Cl.: C08L 9/00, C04B 26/04

(54) **ZUSAMMENSETZUNG UND DEREN VERWENDUNG ALS FUGENMASSE**

(71) Anmelder: Evonik Operations GmbH, 45128 Essen (DE)
(72) Erfinder: BERLINEANU, Andreas, 45772 Marl (DE); BEUERS, Gudula, 48249 Dülmen (DE); BUKOHL, Margit, 45770 Marl (DE); LUCE, Kirsten, 44623 Herne (DE); JITTENMEIER, Siegfried, 45768 Marl (DE); KRANNIG, Kai-Steffen, 44229 Dortmund (DE); HERWIG, Jürgen, 46569 Hünxe (DE)
(74) Vertreter: Evonik Patent Association

(57) **Zusammenfassung**

Die vorliegende Erfindung betrifft eine Zusammensetzung, enthaltend mindestens ein Polydien, mindestens eine organische Übergangsmetallverbindung, mindestens eine, mindestens eine Vinylgruppe aufweisende Siliziumverbindung und mindestens ein Netzmittel, wobei die mindestens eine Siliziumverbindung mindestens zwei Siliziumatome aufweist, sowie die Verwendung dieser Zusammensetzung als oder zur Herstellung von Fugenmasse, Fugendichtungsmasse, Klebstoff, Kitt, Spachtelmasse oder Schwingungsdämpfungsmasse.

## Beschreibung

Die vorliegende Erfindung betrifft eine Zusammensetzung, enthaltend mindestens ein Polydien, mindestens eine organische Übergangsmetallverbindung, mindestens eine, mindestens eine Vinylgruppe aufweisende Siliziumverbindung und mindestens ein Netzmittel, wobei die mindestens eine Siliziumverbindung mindestens zwei Siliziumatome aufweist, sowie die Verwendung dieser Zusammensetzung als oder zur Herstellung von Fugenmasse, Fugendichtungsmasse, Klebstoff, Kitt, Spachtelmasse oder Schwingungsdämpfungsmasse.

Die Verwendung von vorzugsweise bei Raumtemperatur flüssigen Butadienölen zur Herstellung von lufttrocknenden Harzen ist seit langem im Stand der Technik beispielsweise aus Römpps Chemielexikon, 8. Auflage, Seite 3280 (Heidel und Dittmann, Chimia, 22, (1968, S. 213-218), bekannt. Auf dem Bausektor haben jedoch Butadienöle in der Vergangenheit aufgrund der schwierigen Verarbeitbarkeit wenig Anklang gefunden. Bekanntermaßen trocknen die flüssigen Polybutadienöle unter der Einwirkung von Luftsauerstoff relativ schnell aus, so dass eine Lagerung unter Schutzgas empfohlen wird, was aufwändig ist. Auch die Verwendung von Lösungsmitteln wie Testbenzinen zur Einstellung der Viskosität der Polybutadienöle beinhaltet gewisse Schwierigkeiten, wenn das mit den Polybutadienölen zu verfestigende Produkt bei üblichen Umgebungstemperaturen, wie beispielsweis Raumtemperatur, an der Luft getrocknet werden soll. Darüber hinaus reagieren die im Handel erhältlichen Polybutadienöle außerordentlich leicht mit Wasser, so dass die zu verbindenden Baustoffe bisher in besonders trockener, praktisch wasserfreier Form eingesetzt werden mussten.

In den 1970- und 1980-iger Jahren hat es zahlreiche Bemühungen gegeben, die Verfestigung von Sand und die Begrünung von Flächen mit flüssigen Polybutadienen zu verbessern.

DE 3300750 A1 beschreibt ein Verfahren zur Herstellung von Formteilen mit verbesserter Nassfestigkeit, die im Wesentlichen aus Sand und einem organischen Bindemittel bestehen, das in an sich bekannter Weise mit Luftsauerstoff vernetzt, wobei man bei der Zubereitung der Formmassen als Bindemittel ein Zusatz- und Hilfsstoffe enthaltendes, reaktive Silylgruppen tragendes Homo- oder Copolymer von 1,3-Dienen, das ein mittleres Molekulargewicht (Mn) von 500 bis 8000 aufweist, einen Gehalt an cis-1,4-Doppelbindungen von mindestens 35 % und einen Siliziumgehalt von 0,1 bis 10 Gewichtsprozent aufweist, einsetzt. Die eingesetzten reaktive SilylGruppen tragenden Polymere von 1,3-Dienen werden dabei, wie in DE 3028839 A1 beschrieben, durch Umsetzung des Polymeren auf Basis von 1,3-Dienen mit einem Vinylsilan erhalten.

DE3436556 A1 (CA 1248271 A1) beschreibt in der Wärme vernetzbare Massen, welche aus einem Bindemittel und übliche Zusatzstoffen bestehen, wobei Zusatzstoffe, die die Kaltvernetzung katalysieren, ausgeschlossen sind, und ein Verfahren zur in der Kälte vernetzenden Massen, welches darin besteht, ein Bindemittel, eine wirksame Menge die Kaltvernetzung katalysierenden Zusatzstoffes und weitere übliche Zusatzstoffe miteinander zu mischen. Das Bindemittel ist eine Kombination von zwei Bindemitteln, welche ohne Zusatz eines Vernetzungsmittels zur Vernetzung miteinander befähigt sind. Als Bindemittel wird zum einen ein primäre und/oder sekundäre Hydroxylgruppen tragendes Polymerisat auf Basis von 1,3-Butadien und zum anderen ein Polymerisat auf Basis von 1,3-Butadien mit seitenständigen Bernsteinsäureanhydridgruppen verwendet. Die Massen sind für außerordentlich vielseitige Anwendungen von Interesse, beispielsweise als Fugendichtungsmassen, Klebstoffe, Kitte, Spachtelmassen und Schwingungsdämpfungsmassen.

DE 4035359 C1 beschreibt lufttrocknende Bindemittel auf der Basis von bei Raumtemperatur flüssigen Polybutadienölen und Lösungsmitteln sowie deren Verwendung zur Verfestigung von Baustoffen, Reststoffen, Abfallstoffen und sonstigen Materialien. Als Lösungs- oder Verdünnungsmittel für die Polybutadienöle werden aromatenfreie aliphatische Kohlenwasserstoffe mit einer Verdunstungszahl nach DIN 53 170 im Bereich von 100 bis 1000 und/oder Terpentinöl verwendet. Zur Beschleunigung der Verfestigung wird die Zugabe von organischen Übergangsmetallsalzen/-verbindungen, zur Hydrophobierung wird die Zugabe von Alkyltrialkoxysilan und zur Verbesserung der Benetzung die Zugabe von Nonylphenolethoxylaten empfohlen.

Monosilane und Nonylphenolethoxylate sind allerdings häufig kennzeichnungspflichtige Verbindungen (z.B. ist Nonylphenylethoxylat als akut toxisch, schwer augenschädigend und Gewässer gefährdend gekennzeichnet), also Verbindungen, die bei Kontakt gegebenenfalls Gesundheitsschäden hervorrufen können.

Aufgabe der vorliegenden Erfindung, war deshalb die Bereitstellung von Massen insbesondere für Anwendungen als Fugenmasse, Fugendichtungsmasse, Klebstoff, Kitt, Spachtelmasse und Schwingungsdämpfungsmasse, die einen oder mehrere der oben genannten Nachteile vermeiden.

Überraschenderweise wurde gefunden, dass eine Zusammensetzung, enthaltend mindestens ein Polydien, mindestens eine organische Übergangsmetallverbindung, mindestens eine, mindestens eine Vinylgruppe aufweisende Siliziumverbindung und mindestens ein Netzmittel, wobei die mindestens eine Siliziumverbindung mindestens zwei Siliziumatome aufweist, diese Aufgabe löst.

Gegenstand der vorliegenden Erfindung sind deshalb Zusammensetzungen, wie in den Ansprüchen beansprucht sowie nachfolgend beschrieben.

Ebenfalls Gegenstand der vorliegenden Erfindung ist die Verwendung der erfindungsgemäßen Zusammensetzungen als oder zur Herstellung von Fugenmasse, Fugendichtungsmasse, Klebstoff, Kitt, Spachtelmasse oder Schwingungsdämpfungsmasse, wie in den Ansprüchen beansprucht sowie nachfolgend beschrieben.

Die erfindungsgemäßen Zusammensetzungen haben den Vorteil, dass sie (im Wesentlichen) frei von Monosilanen, insbesondere Vinyltrimethoxysilan oder Vinyltrichlorsilan, und Nonylphenolethoxylate sind und somit eine gesundheitliche Beeinträchtigung beim Kontakt mit der Zusammensetzung durch diese Substanzen ausgeschlossen werden kann. Trotz der Verwendung anderer Materialien zeigen daraus hergestellte Probekörper gleiche oder sogar bessere Eigenschaften, insbesondere bei der Biegezugfestigkeit.

Durch den bevorzugten Einsatz von Wollastonit an Stelle eines Teils des sonst verwendeten, feinteiligen Quarzsands, kann zu dem eine deutliche Steigerung der Biegezugfestigkeit erreicht werden.

Durch den bevorzugten Einsatz eines Gemisches aus organischen Mangan- unbd Zirkonium-Verbindungen an Stelle von Cobalt-Verbindungen kann unabhängig vom eingesetzten Quarzsand eine höhere Endfestigkeit und eine höhere Biegezugfestigkeit der Probekörper erzielt werden.

Die erfindungsgemäßen Zusammensetzungen, ein Verfahren zu deren Herstellung und die erfindungsgemäße Verwendung der Zusammensetzungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Unter Polydienen werden im Rahmen der vorliegenden Erfindung solche Polymere verstanden, die auf Alkenen und/oder Polyenen mit mindestens zwei olefinischen Doppelbindungen als Monomere basieren. Im Rahmen der vorliegenden Erfindung bestehen die Wiederholungseinheiten der Polydiene ausschließlich aus den Elementen Kohlenstoff und Wasserstoff und weisen keine aromatischen Strukturen auf. Die Polydiene können dabei einen beliebigen Anteil an Doppelbindungen enthalten.

Die erfindungsgemäße Zusammensetzung, enthaltend mindestens ein Polydien, vorzugsweise mindestens ein Polybutadien, mindestens eine organische Übergangsmetallverbindung, vorzugsweise ausgewählt aus Co, Mn und/oder Zr, mindestens eine, mindestens eine Vinylgruppe aufweisende Siliziumverbindung und mindestens ein Netzmittel, zeichnet sich dadurch aus, dass die mindestens eine, mindestens eine Vinylgruppe aufweisende, Siliziumverbindung mindestens zwei Siliziumatome aufweist. Vorzugsweise genügt die mindestens zwei Siliziumatome aufweisende Siliziumverbindung der Summenformel (I)

SiₙOₙ₋₁R₂ₙ₊₂ (I)

mit n größer-gleich 2, vorzugsweise 2 bis 20, bevorzugt 2,5 bis 10 und besonders bevorzugt 3 bis 6, R gleich oder verschieden Alkenyl-, bevorzugt Vinyl-Rest, Alkyl-Rest, bevorzugt Alkyl-Rest mit 1 bis 4 Kohlenstoffatomen, Alkoxy-Rest, bevorzugt Alkoxy-Rest mit 1 bis 4 Kohlenstoffatomen, Halogen-Rest, bevorzugt Chlor-Rest, mit der Maßgabe, dass mindestens ein Rest R ein Vinyl-Rest, ist.

Bevorzugte mindestens zwei Siliziumatome aufweisende Siliziumverbindungen genügen der Formel (la)

R₃Si-O[SiR'₂-O]ₙSiR₃ (la)

mit n größer-gleich 2, vorzugsweise 2 bis 20, bevorzugt 2,5 bis 10 und besonders bevorzugt 3 bis 6, R gleich oder verschieden Alkenyl-Rest, bevorzugt Vinyl-Rest, Alkyl-Rest, bevorzugt Alkyl-Rest mit 1 bis 4 Kohlenstoffatomen, Alkoxy-Rest, bevorzugt Alkoxy-Rest mit 1 bis 4 Kohlenstoffatomen, Halogen-Rest, bevorzugt Chlor-Rest, und R` gleich R oder ein Rest der Si-O-Einheiten aufweist, vorzugsweise R' gleich R und mit der Maßgabe, dass mindestens ein Rest R ein Vinyl-Rest ist.

Erfindungsgemäß einsetzbare Siliziumverbindungen, die mindestens eine Vinylgruppe und mindestens zwei Siliziumatome aufweisen, sind z.B. organomodifizierte Siloxane, wie sie z.B. von Evonik Operations GmbH erhalten werden können. Bevorzugt werden Vinyl- und Methoxygruppenhaltige oligomere Siloxane eingesetzt, wie z.B. Dynasylan^{®} 6490 der Evonik Operations GmbH. Die Herstellung solcher organomodifizierter Siloxane wird z.B. in WO 2013/076036 A1 beschrieben.

Die in der erfindungsgemäßen Zusammensetzung enthaltene mindestens eine organische Übergangsmetallverbindung, vorzugsweise ausgewählt aus Co-, Mn- und/oder Zr-Verbindung, ist vorzugsweise ein Salz einer organischen Säure, vorzugsweise einer Carbonsäure mit 4 bis 12, vorzugsweise 7 bis 10 Kohlenstoffatomen. Bevorzugte Übergangsmetallverbindungen sind die Octanoate der entsprechenden Übergangsmetalle. Es kann vorteilhaft sein, wenn in der erfindungsgemäßen Zusammensetzung zwei Übergangsmetallverbindungen, bevorzugt Mn- und Zr-Verbindungen und besonders bevorzugt Manganoctoat und Zirconiumoctoat vorhanden sind.

Vorzugsweise enthält mindestens eines der in der erfindungsgemäßen Zusammensetzung enthaltenen Polydiene die von 1,3-Butadien abgeleiteten Monomereinheiten 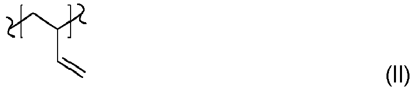 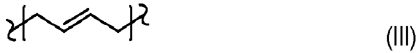 und 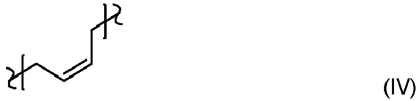 oder besteht bevorzugt aus diesen, mit der Maßgabe, dass die Monomereinheiten (II), (III) und (IV) blockweise oder statistisch verteilt angeordnet sein können und bezogen auf das Polybutadien der prozentuale Anteil der Monomereinheit (II) = 1 bis 30 Molprozent beträgt, bezogen auf die Monomereinheit (III) = 50 bis 90 Molprozent beträgt und der Anteil der Monomereinheit (IV) 9 bis 40 Molprozent beträgt, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einem Wasserstoff verbunden ist.

Im Polydien können zusätzlich zu einem Anteil von bis zu 5 Molprozent bezogen auf das Polybutadien eine oder mehrere verzweigende Struktur/en der Formeln (V), (VI) oder (VII) 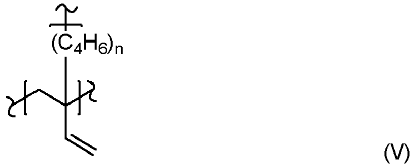 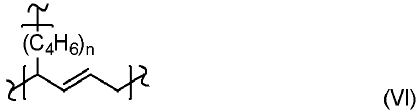 und/oder 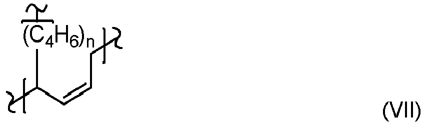 vorhanden sein, wobei "(C₄H₆)ₙ" einer Butadien-Oligomer enthaltend die oder vorzugsweise bestehend aus den Wiederholungseinheiten (II), (III) und (IV) entspricht.

Das zahlenmittlere Molekulargewicht Mn der Polybutadiene, bestimmt durch Gelpermeationschromatographie wie in der Beispielsektion beschrieben, beträgt vorzugsweise von 500 bis 10.000 g/mol, bevorzugt von 1.000 bis 5.000 g/mol und besonders bevorzugt von 1.500 und 4.000 g/mol.

Darüber hinaus kann das Polybutadien in einer teilweise oder vollständig hydrierten Form vorliegen. Vorzugsweise liegt das Polybutadien aber in der unhydrierten Form vor.

Geeignete Polydiene, insbesondere Polybutadiene, können z.B. bei der Evonik Operations GmbH bezogen werden.

Als Netzmittel können alle bekannten, als Netzmittel geeigneten Verbindungen oder Gemische, insbesondere Tenside, eingesetzt werden. Vorzugsweise werden als Netzmittel Verbindungen eingesetzt, die keine aromatischen Ringe aufweisen, und bevorzugt polymere Verbindungen auf Basis von Ethylenoxid und 3,5,5-Trimethylhexylalkohol und optional weiteren Verbindungen sind. Geeignete Netzmittel werden z. B von der Evonik Operations GmbH unter dem Namen TEGO^{®} WET angeboten. Besonders geeignet ist TEGO^{®} WET 500, welches polymere Verbindungen auf Basis von Ethylenoxid und 3,5,5-Trimethylhexylalkohol enthält.

Die erfindungsgemäßen Zusammensetzungen können, insbesondere wenn sie als Baumaterialien verwendet werden sollen, mindestens einen mineralischen Baustoff, bevorzugt Zement, Sand, Ton, Kies, Schotter und/oder Gips, besonders bevorzugt Sand und/oder Zement aufweisen. Der Anteil an mineralischen Baustoffen an der Gesamtzusammensetzung beträgt vorzugsweise mindestens 25 Gew.- %, bevorzugt von 50 bis 99,9 Gew.-%, besonders bevorzugt von 90 bis 99 Gew.-% und ganz besonders bevorzugt von 95 bis 98 Gew.-%.

Die Herstellung der erfindungsgemäßen Zusammensetzungen kann auf einfache Weise durch Mischen der einzelnen Komponenten erfolgen. Weisen die erfindungsgemäßen Zusammensetzungen mineralische Baustoffe auf, so erfolgt vorzugsweise die Mischung der Komponenten die keine mineralischen Baustoffe sind, bevor anschließend der oder die mineralischen Baustoffe zugemischt werden. Das Mischen kann in handelsüblichen Mischern erfolgen. Das Mischen kann unter Luftausschluss, unter, z.B. Stickstoff, oder unter Luftatmosphäre erfolgen. Vorzugsweise erfolgt das Mischen unter Schutzgas, bevorzugt unter Stickstoff.

Die erfindungsgemäßen Zusammensetzungen können als oder zur Herstellung von z. B. Fugenmasse, Fugendichtungsmasse, Klebstoff, Kitt, Spachtelmasse oder Schwingungsdämpfungsmasse verwendet werden.

### Beispiele:

### Messmethoden:

### 1. Gelpermeationschromatographie

Das zahlenmittlere Molekulargewicht Mn und das gewichtsmittlere Molekulargewicht Mn der im Rahmen der vorliegenden Erfindung eingesetzten Polymere wird nach DIN 55672-1 mittels Gelpermeationschromatographie in Tetrahydrofuran als Eluent und Polystyrol zur Kalibrierung bestimmt. Die Polydispersität (U) = Mw/Mn.

### 2. Untersuchung der Biegefestigkeit

Die Biegefestigkeit wurde an einem Spekt 10-1 table der Fa. Hegewald & Peschke gemäß DIN 51902 untersucht. Hierfür wird der Prüfkörper in der Messvorrichtung (Stützweite 50mm) aufgelegt und der Druckfuss vorsichtig an den Prüfkörper herangefahren. Anschließend wird der Druckfuss mit konstanter Geschwindigkeit (5mm/min) gegen den Prüfkörper gepresst und dabei die Kraftaufnahme in Abhängigkeit der Weglänge aufgezeichnet. Das Experiment gilt als beendet, wenn die Kraftaufnahme auf 10% der maximal aufgewendeten Kraft gesunken ist.

### 3. Untersuchung der Wasseraufnahme

Die Wasseraufnahme wurde an einem zylindrischem Prüfkörper (Durchmesser 4cm, Höhe 1 cm) untersucht. Hierfür wird ein Tropfen Wasser (0,05 mL) mittels Einwegpipette auf die Oberfläche des Prüfkörpers gegeben und die Zeit gemessen, bis das Wasser vollständig in den Prüfkörper eingezogen ist.

### Eingesetzte Rohstoffe:

- POLYVEST^{®} 110: Polybutadien der Evonik Operations GmbH
- DYNASYLAN^{®} VTMO: Vinyltrimethoxysilan der Evonik Operations GmbH
- DYNASYLAN^{®} 6490 der Evonik Operations GmbH
- TEGO^{®} WET 500 der Evonik Operations GmbH
- MARLOPHEN^{®} NP 8.5: Nonylphenolpolyglycolether der Sasol Olefin & Surfactants GmbH
- Cobaltoktoat
- OCTA-SOLIGEN^{®} Cobalt 10 (50 - 60 %), Cobaltoktoat der Borchers GmbH
- OCTA-SOLIGEN^{®} Manganese 10 (55 - 65 %), Manganoktoat der Borchers GmbH
- OCTA-SOLIGEN^{®} Zirconium 12 HS (30 - 40 %) Zirkoniumoktoat der Borchers GmbH
- Quarzsand H31 der Quarzwerke GmbH, Herstellwerk Haltern, (nachfolgend H31)
- Quarzsand H35 der Quarzwerke GmbH, Herstellwerk Haltern, (nachfolgend H35)

### Beispiel 1 (Vergleichsbeispiel):

94,62 g POLYVEST^{®} 110, 3,0 g DYNASYLAN^{®} VTMO, 1,43 g MARLOPHEN^{®} NP 8.5 und 0,95 g OCTA-SOLIGEN^{®} Cobalt 10 wurden in einem Glasgefäß vereinigt und die Mischung durch intensives Rühren homogenisiert. Anschließend werden 3,0 g der Mischung mit 97 g H31 vereinigt und intensiv durchmischt. Die fertige Masse wurde in die Probeform gefüllt, glatt-gestrichen und bei der gewünschten Temperatur ausgehärtet. Die Ergebnisse der Ausprüfung sind Tabelle 1 zu entnehmen.

### Beispiel 2 (erfindungsgemäß):

94,6 g POLYVEST^{®} 110, 3,0 g DYNASYLAN^{®} 6490, 1,4 g TEGO^{®} WET 500 und 1,0 g OCTA-SOLIGEN^{®} Cobalt 10 werden in einem Glasgefäß vereinigt und die Mischung durch intensives Rühren homogenisiert. Anschließend werden 3,0 g der Mischung mit 97 g des entsprechenden Füllstoffs (H31 oder H35) oder 3,0 g der Mischung mit 80 g H35 und 15 g Wollalstonit vereinigt und intensiv durchmischt. Die fertigen Massen wurden in die Probeform gefüllt, glattgestrichen und bei der gewünschten Temperatur ausgehärtet. Die Ergebnisse der Ausprüfung sind Tabelle 1 zu entnehmen.

### Beispiel 3 (erfindungsgemäß):

93,0 g POLYVEST^{®} 110, 3,0 g DYNASYLAN^{®} 6490, 1,4 g TEGO^{®} WET 500, 1,6 g 1,6g OCTA-SOLIGEN^{®} Manganese 10 und 1,0g OCTA-SOLIGEN^{®} Zirconium 12 HS werden in einem Glasgefäß vereinigt und die Mischung durch intensives Rühren homogenisiert. Anschließend werden 3,0 g der Mischung mit 97 g des entsprechenden Füllstoffs (H31 oder H35, siehe Tabelle 1) vereinigt und intensiv durchmischt. Die fertigen Massen wurden in die Probeform gefüllt, glattgestrichen und bei der gewünschten Temperatur ausgehärtet. Die Ergebnisse der Ausprüfung sind Tabelle 1 zu entnehmen.

Die Durchführung der Untersuchung der Biegefestigkeit und Wasseraufnahme erfolgte an Hand einiger Prüfkörper zu verschiedenen Zeitpunkten während der Aushärtung. Für die Aushärtung wurden die Prüfkörper (10x10x65mm) zunächst 2 Stunden bei 55°C (Bezeichnung in Tabelle 1: 2 h) und anschließend für 7 Tage bei 25 °C, 1013 hPa und 50 % Luftfeuchtigkeit gelagert (Bezeichnung in Tabelle 1: 7 Tage). Die Ergebnisse der Ausprüfung sind Tabelle 1 zu entnehmen.

**Tabelle 1:**

| | Biegefestigkeit in N/mm² nach Trocknung für | | Wasseraufnahme in sec nach Trocknung für | |
|---|---|---|---|---|
| | 2h | 7 Tage | 2h | 7 Tage |
| Beispiel 1: H31 | 2,9 | 2,9 | - | - |
| Beispiel 2: H31 | 2,6 | 2,6 | 99 | 0 |
| Beispiel 2: H35 | 5 | 5 | 90 | 0 |
| Beispiel 2: H35 + Wollastonit | 10,37 | 10,37 | - | - |
| Beispiel 3: H31 | 1,68 | 1,68 | 99 | 0 |
| Beispiel 3: H35 | 2,83 | 2,83 | 134 | 0 |

| | | | | |
|---|---|---|---|---|
| - = nicht bestimmt 0 = keine Aufnahme | | | | |

Wie Tabelle 1 entnommen werden kann, können durch Einsatz der erfindungsgemäßen Formulierungen Probekörper erhalten werden, die im Wesentlichen die gleiche Biegezugfestigkeit aufweist, wie Probekörper, die unter Verwendung von Formulierungen, die die Komponenten des Standes der Technik aufweisen, erzeugt wurden. Durch eine Teilsubstitution des feinteiligen Quarzsandes H35 mit Wollastonit kann zudem eine deutliche Steigerung der Biegezugfestigkeit erzielt werden.

Wie den Werten für die Ausprüfung der Probekörper gemäß Beispiel 3 zu entnehmen ist, kann nach 7 Tagen Härtung außerdem eine deutlich höhere (End-)Biegezugfestigkeit erreicht werden, wenn an Stelle einer Cobaltverbindung ein System aus Mangan- und Zirkoniumverbindung eingesetzt wird.

Wie Tabelle 1 außerdem entnommen werden kann, ist die Wasseraufnahme nach kurzer Aushärtungszeit am geringsten, wenn die Formulierung gemäß Beispiel 3 mit H35 verwendet wird.

## Patentansprüche

1. Zusammensetzung, enthaltend mindestens ein Polydien, vorzugsweise mindestens ein Polybutadien, mindestens eine organische Übergangsmetallverbindung, vorzugsweise ausgewählt aus Co, Mn und/oder Zr, mindestens eine, mindestens eine Vinylgruppe aufweisende Siliziumverbindung und mindestens ein Netzmittel, **dadurch gekennzeichnet, dass** die mindestens eine, mindestens eine Vinylgruppe aufweisende, Siliziumverbindung mindestens zwei Siliziumatome aufweist.

2. Zusammensetzung nach Anspruch 1, **dadurch gekennzeichnet, dass** die mindestens zwei Siliziumatome aufweisende Siliziumverbindung der Summenformel (I) genügt
SiₙOₙ₋₁R₂ₙ₊₂ (I)
mit n größer-gleich 2, vorzugsweise 2 bis 20, bevorzugt 2,5 bis 10 und besonders bevorzugt 3 bis 6, R gleich oder verschieden Alkenyl, bevorzugt Vinyl-Rest, Alkyl-Rest, bevorzugt Alkyl-Rest mit 1 bis 4 Kohlenstoffatomen, Alkoxy-Rest, bevorzugt Alkoxy-Rest mit 1 bis 4 Kohlenstoffatomen, Halogen-Rest, bevorzugt Chlor-Rest, mit der Maßgabe, dass mindestens ein Rest R ein Vinyl-Rest, ist.

3. Zusammensetzung nach Anspruch 1 oder 2, **dadurch gekennzeichnet, dass** die mindestens zwei Siliziumatome aufweisende Siliziumverbindung der Formel (la) genügt
R₃Si-O[SiR'₂-O]ₙSiR₃ (la)
mit n größer-gleich 2, vorzugsweise 2 bis 20, bevorzugt 2,5 bis 10 und besonders bevorzugt 3 bis 6, R gleich oder verschieden Alkenyl, bevorzugt Vinyl-Rest, Alkyl-Rest, bevorzugt Alkyl-Rest mit 1 bis 4 Kohlenstoffatomen, Alkoxy-Rest, bevorzugt Alkoxy-Rest mit 1 bis 4 Kohlenstoffatomen, Halogen-Rest, bevorzugt Chlor-Rest, und R` gleich R oder ein Rest der Si-O-Einheiten aufweist, vorzugsweise R' gleich R, mit der Maßgabe, dass mindestens ein Rest R ein Vinyl-Rest, ist.

4. Zusammensetzung nach einem der Ansprüche 1 bis 3, **dadurch gekennzeichnet, dass** zwei Übergangsmetallverbindungen, bevorzugt Mn- und Zr-Verbindungen und besonders bevorzugt Manganoctoat und Zirconiumoctoat vorhanden sind.

5. Zusammensetzung nach einem der Ansprüche 1 bis 4, **dadurch gekennzeichnet, dass** das mindestens eine Polydien die von 1,3-Butadien abgeleiteten Monomereinheiten 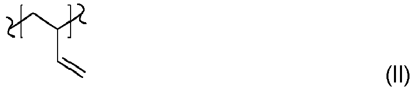 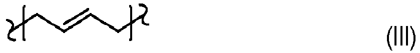 und 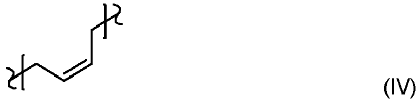 enthält oder bevorzugt aus diesen besteht, mit der Maßgabe, dass die Monomereinheiten (II), (III) und (IV) blockweise oder statistisch verteilt angeordnet sein können und bezogen auf das Polybutadien der prozentuale Anteil der Monomereinheit (II) = 10 bis 40 Molprozent beträgt, bezogen auf die Monomereinheit (III) = 40 bis 85 Molprozent beträgt und der Anteil der Monomereinheit (IV) 5 bis 40 Molprozent beträgt, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einem Wasserstoff verbunden ist.

6. Zusammensetzung nach Anspruch 5, **dadurch gekennzeichnet, dass** im Polydien zusätzlich zu einem Anteil von bis zu 5 Molprozent bezogen auf das Polybutadien eine oder mehrere verzweigende Struktur/en der Formeln (V), (VI) oder (VII) 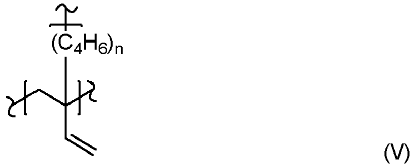 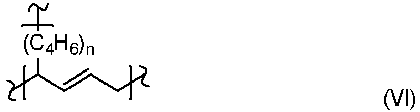 und/oder 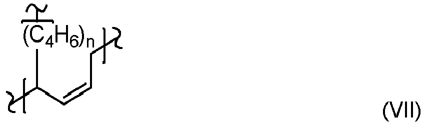 vorhanden sind, wobei "(C₄H₆)ₙ" einer Butadien-Oligomer enthaltend die oder vorzugsweise bestehend aus den Wiederholungseinheiten (II), (III) und (IV) entspricht.

7. Zusammensetzung nach einem der vorangegangenen Ansprüche, **dadurch gekennzeichnet, dass** als Netzmittel Verbindungen eingesetzt werden, die keine aromatischen Ringe aufweisen, und bevorzugt polymere Verbindungen auf Basis von Ethylenoxid und 3,5,5-Trimethylhexylalkohol und optional weiteren Verbindungen sind.

8. Zusammensetzung nach einem der vorangegangenen Ansprüche, **dadurch gekennzeichnet, dass** die Zusammensetzung mindestens einen mineralischen Baustoff, bevorzugt Zement, Sand, Ton, Kies, Schotter und/oder Gips, besonders bevorzugt Sand und/oder Zement aufweist.

9. Zusammensetzung nach Anspruch 8, **dadurch gekennzeichnet, dass** der Anteil an mineralischen Baustoffen an der Gesamtzusammensetzung mindestens 25 Gew.-%, bevorzugt von 50 bis 99,9 Gew.-%, besonders bevorzugt von 90 bis 99 Gew.-% und ganz besonders bevorzugt von 95 bis 98 Gew.-% beträgt.

10. Verwendung von Zusammensetzungen nach einem der Ansprüche 1 bis 9 als oder zur Herstellung von Fugenmasse, Fugendichtungsmasse, Klebstoff, Kitt, Spachtelmasse oder Schwingungsdämpfungsmasse.
